# EUROPÄISCHE PATENTSCHRIFT

(11) **EP 4 011 190 B1**
(45) Veröffentlichungstag und Bekanntmachung des Hinweises auf die Patenterteilung: **25.12.2024**
(21) Anmeldenummer: 21199759.8
(22) Anmeldetag: 29.09.2021
(51) Int. Cl.: A01D 41/12, A01F 29/04, A01F 12/40

(54) **STROHHÄCKSLER**
STRAW CHOPPER
BROYEUR DE PAILLE

(30) Priorität: 08.12.2020 DE 102020132553
(43) Veröffentlichungstag der Anmeldung: 15.06.2022
(73) Patentinhaber: CLAAS Selbstfahrende Erntemaschinen GmbH, 33428 Harsewinkel (DE)
(72) Erfinder: Beulke, Christian, 37589 Echte (DE); Heinze, Matthias, 33609 Bielefeld (DE); Elpmann, Manuel, 33154 Salzkotten (DE)
(74) Vertreter: CLAAS Gruppe

(56) Entgegenhaltungen:
- EP-A1- 1 491 084
- DE-A1- 102007 053 923
- DE-T2- 3 879 223
- US-A- 4 998 679

## Beschreibung

Die Erfindung betrifft einen Strohhäcksler mit auf einer drehbaren Trommel angeordneten Messern sowie einen Mähdrescher mit einem Strohhäcksler gemäß den Ansprüchen 1 und 7.

Strohhäcksler sind in aller Regel in Mähdreschern verbaut, wobei den Strohhäckslern von einer Abscheidevorrichtung Erntegut, insbesondere das Stroh, zugeführt wird. Innerhalb des Strohhäckslers wird das Erntegut von auf einer Trommel angeordneten Messern kleingehäckselt. Das kleingehäckselte Erntegut wird anschließend mittels Strohleitvorrichtungen auf den Boden verstreut.

Die DE8620970U1 offenbart einen Strohhäcksler mit einer im bestimmungsgemäßen Betriebszustand rotierenden Trommel. Auf dem Trommelmantel ist außenseitig eine Vielzahl von Messern angeordnet. Um eine bessere Breitenstreuung zu erreichen, sind in der DE8620970U1 in einem mittleren Bereich der Trommel beidseitig geschliffene Messer sowie rechts und links einseitig geschliffene und mit ihren Schliffflächen nach außen ausgerichtete Messer angeordnet. Die Schliffflächen der einseitig geschliffenen Messer lenken im Betriebszustand das Erntegut nach außen ab. Eine derartige Anordnung der Messer hat den Nachteil, dass Erntegut in den äußeren Bereichen häufig gegen die Karosserie des Mähdreschers gefördert wird und außenseitig eine überproportional große Menge des gehäckselten Ernteguts ausgeworfen wird.

Insbesondere erweist sich die von der DE8620970U1 offenbarte Anordnung der Messer besonders nachteilig bei Mähdreschern mit einer aus einem einzelnen Axialrotor bestehenden Abscheidevorrichtung. Die Breitenverteilung des der Häckselvorrichtung von der Abscheideeinrichtung zugeführten Ernteguts weist im Wesentlichen die Form einer Glockenkurve auf, sodass den Randbereichen der Häckselvorrichtung eine geringe Menge an Erntegut zugeführt wird. Das ablenken des Ernteguts aus dem Randbereichen wirkt sich dementsprechend hier negativ auf die Breitenverteilung aus. Hingegen erweist sich ein Ableiten des Ernteguts aus dem mittleren Bereich hier als besonders zweckmäßig, da der Häckselvorrichtung in diesem Bereich eine besonders große Menge an Erntegut zugeführt wird.

Darüber hinaus ist die von der DE8620970U1 offenbarte Messeranordnung nachteilig, da infolge der verschieden ausgestalteten Messer weniger Gleichteile verwendet werden und die beidseitig geschliffenen Messer auf Grund des komplexeren Schleifvorgangs kostenintensiver als einseitig geschliffene Messer sind.

Ein derartiger Strohhäcksler ist auch aus der US 4 998 679 A bekannt,

Ein Strohhäcksler mit einer Aufteilung der drehbaren Trommel in unterschiedlich fördernde Abschnitte ist aus der DE 10 2007 053923 A1 bekannt, wobei die unterschiedlichen Förderrichtungen durch eine Torsion der Messer entlang ihrer radialen Erstreckung erreicht wird. Diese Torsion prägt der Strömung einen höheren Impuls auf, ist jedoch nachteilig bezüglich des Herstellungsaufwands und des Energiebedarfs.

Es ist deshalb Aufgabe der Erfindung, die beschriebenen Nachteile des Standes der Technik zu vermeiden und insbesondere mit einfachen Mitteln die Breitenverteilung eines Strohhäckslers zu optimieren.

Diese Aufgabe wird erfindungsgemäß durch die kennzeichnenden Merkmale der Ansprüche 1 und 7 gelöst.

Gemäß dem Anspruch 1 wird ein Strohhäcksler mit auf einer drehbaren Trommel angeordneten Messern zum Häckseln von Erntegut vorgeschlagen, wobei die Messer im jeweiligen Schneidbereich einseitig angeschliffene Schliffflächen aufweisen. Erfindungsgemäß sind die Messer derart auf der Trommel angeordnet, sodass die Trommel in zumindest drei neutral ausgerichtete Förderzonen und zwei jeweils das Erntegut nach außen ablenkende Zwischenzonen unterteilt ist.

Die Erfindung hat viele Vorteile. Dadurch, dass die Zonen durch die Anordnung der Messer definiert sind, können sämtliche Messer als Gleichteile ausgeführt sein. Entsprechend sind in den neutral ausgerichteten Zonen keine zusätzlichen beidseitig geschliffenen Messer erforderlich. Weiterhin ermöglicht es die Anzahl der neutral ausgerichteten Förderzonen zusätzlich in den Randbereichen der Trommel jeweils eine neutral ausgerichtete Förderzone anzuordnen, sodass eine optimale Breitenverteilung des der Trommel zugeführten Ernteguts erreicht wird.

Innerhalb der neutral ausgerichteten Förderzonen sind die Messer derart ausgerichtet, sodass das Erntegut im Wesentlichen in Umfangsrichtung der Trommel abgelenkt wird. Mittels an den Randbereichen der Trommel angeordneten neutral ausgerichtete Förderzonen kann somit vermieden werden, dass sich in den äußeren Bereichen zu viel Erntegut ansammelt und darüber hinaus das Erntegut in den äußeren Bereichen gegen Karosserieelemente gefördert wird. Die zwei das Erntegut nach außen ablenkenden Zwischenzonen ermöglichen es das Erntegut aus den Bereichen abzulenken, in denen sich besonders viel Erntegut befindet. Hierfür sind die Messer innerhalb der das Erntegut nach außen ablenkenden Zwischenzonen derart ausgerichtet, sodass diese das Erntegut in axialer Richtung der Trommel ablenken.

In einer vorteilhaften Ausgestaltung können sich die Zwischenzonen jeweils benachbart zwischen zwei neutral ausgerichteten Förderzonen befinden, wobei die Zwischenzonen direkt an die Neutral ausgerichteten Förderzonen angrenzen.

Erfindungsgemäß ist in den Randbereichen der Trommel jeweils eine neutral ausgerichtete Förderzone und in einem mittleren Bereich der Trommel eine weitere neutral ausgerichtete Förderzone ausgebildet. Im mittleren Bereich der Trommel ist die Anordnung einer neutral ausgerichteten Förderzone besonders vorteilhaft um zu erreichen, dass ein Anteil des gehäckselten Ernteguts den Strohhäcksler in Umfangsrichtung der Trommel verlässt und zusätzlich um zu vermeiden, dass zu viel Erntegut nach außen in Richtung der Randbereiche der Trommel abgelenkt wird. In den Randbereichen ist eine Anordnung der neutral ausgerichteten Förderzonen besonders vorteilhaft um zu vermeiden, dass Erntegut außenseitig von der Trommel gegen Karosserieelemente gefördert wird. Zwischen den neutral ausgerichteten Förderzonen erstrecken sich hierbei die nach außen ablenkenden Zwischenzonen.

In einer weiteren vorteilhaften Weiterbildung kann die Trommel eine Vielzahl von Befestigungslaschen umfassen, wobei die Messer jeweils paarweise an einer Befestigungslasche angeordnet sind, wobei in den neutralen Förderzonen die einseitigen Schliffflächen der jeweiligen Messer eines Messerpaares einander zugewandt angeordnet sind. Mittels der Befestigungslaschen können die Messer auf einfache Art und Weise an der Trommel befestigt werden, wobei die zwei Messer eines Messerpaares einen geringen Abstand zueinander aufweisen. Dadurch das die Schliffflächen eines Messerpaares einander zugewandt sind, neutralisiert sich die durch die Schliffflächen hervorgerufene Ablenkung des Ernteguts innerhalb eines Paares. Der geringe Abstand der Messer eines Messerpaares zueinander begünstigt dieses Verhalten.

In einer vorteilhaften Weiterbildung können in den Zwischenzonen die Schliffflächen der Messer in Richtung des nächstliegenden Trommelelendes ausgerichtet sein, sodass durch die Schiffflächen das Erntegut in Richtung des nächstliegenden Außenbereichs abgelenkt wird. Bevorzugt können die Messer spiegelsymmetrisch ausgebildet sein, wobei die Messer vorzugsweise eine trapezförmige Querschnittsfläche aufweisen. Hierdurch wird erreicht, dass sämtliche Messer der Trommel als Gleichteile ausgebildet sind. Die Messer können mittels einer Drehung um 180° mit ihren Schliffflächen sowohl in Richtung der linken als auch in Richtung der rechten Stirnseite der Trommel ausgerichtet werden. Eine derartige Ausgestaltung ist besonders aus monetärer Sicht vorteilhaft. Ein weiterer Vorteil ergibt sich hieraus für den Bediener, da dieser eine geringere Vielfalt an vorzuhaltenden Ersatzteilen benötigt.

In einer besonders bevorzugten Ausgestaltung können die das Erntegut nach außen ablenkenden Zwischenzonen jeweils das Erntegut in Richtung des nächstliegenden Außenbereichs ablenken, sodass sich eine optimale Breitenverteilung beim auswerfen des Ernteguts auf den Boden ergibt.

Gemäß Anspruch 7 wird ein Mähdrescher mit einer Abscheideeinrichtung vorgeschlagen, wobei die Abscheideeinrichtung zumindest einen Axialrotor umfasst, wobei der Abscheideeinrichtung ein Strohhäcksler prozesstechnisch nachgeordnet ist. Erfindungsgemäß ist der Strohhäcksler nach einem der Ansprüche 1 bis 6 ausgestaltet. Die Verwendung eines derartigen Strohhäckslers erweist sich als besonders Vorteilhaft bei einem Mähdrescher, dessen Abscheideeinrichtung einen Axialrotor umfasst. Die Breitenverteilung des dem Strohhäcksler von einem Axialrotor zugeführten Ernteguts weist im Wesentlichen die Form einer Glockenkurve auf, sodass ein nach den Ansprüchen 1 bis 6 ausgestalteter Strohhäcksler zum Erreichen einer gleichmäßigen Breitenverteilung hier besonders vorteilhaft ist.

Eine vorteilhafte Weiterbildung sieht vor, dass die Abscheideeinrichtung zwei Axialrotoren umfasst, wobei die Trommel des Strohhäckslers weitere alternierend zueinander angeordnete neutral ausgerichtete Förderzonen und Zwischenzonen aufweist, wobei die Trommel vorzugsweise fünf neutral ausgerichtete Förderzonen und vorzugsweise vier Zwischenzonen aufweist, sodass eine optimale Breitenverteilung des gehäckselten Ernteguts auch bei Abscheideeinrichtungen mit zwei Axialrotoren erreicht werden kann.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht eines Mähdreschers;
- Figur 2a: die Trommel eines Strohhäckslers mit außenseitig auf der Trommel angeordneten Messern;
- Figur 2b: einen Ausschnitt der Trommel entsprechend Figur 2a mit einer Kennzeichnung von durch die Ausrichtung der Messer definierten Zonen;
- Figur 3: eine Detailansicht eines Messers der Trommel.

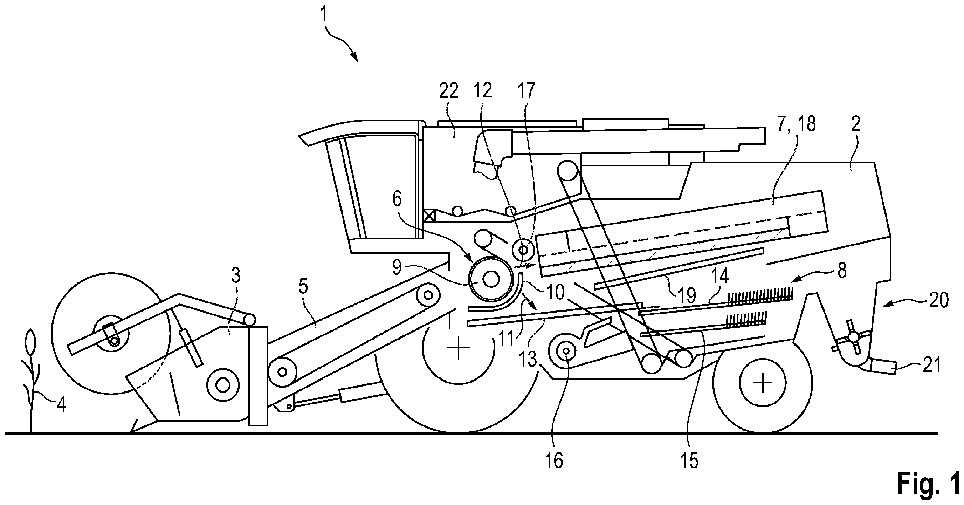

Der in Fig. 1 schematisch dargestellte Mähdrescher 1 besteht aus einem mit dem Fahrwerk verbundenen Traggestell, auf dem ein mehrteiliges Maschinengehäuse 2 befestigt ist. Der Mähdrescher 1 nimmt mit einem Schneidwerk 3 in an sich bekannter Weise Erntegut 4 von einem Feld auf.

Das aufgenommene Erntegut 4 wird über einen Schrägförderer 5 an das Dreschwerk 6 einer Dresch- und Trenneinrichtung übergeben. Die Dresch- und Trenneinrichtung umfasst das ein- oder mehrtrommelig ausgeführtes Dreschwerk 6, eine dem Dreschwerk 6 nachgeordnete Abscheideeinrichtung 7 und eine Siebanordnung 8.

In dem ein- oder mehrtrommelig ausgeführten Dreschwerk 6 wird das Erntegut 4 zwischen den Dreschtrommeln 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich des Dreschwerks 6 aus diesem austretende weitere, im Wesentlichen aus Halmgut, insbesondere Stroh, und einem Restkornanteil bestehende Teilstrom 12 wird mittels einer Stohleittrommel 17 zu einer als Axialrotor 18 ausgeführten Abscheideeinrichtung 7 geleitet. Einzelheiten bezüglich der Struktur eines Axialrotors 18 sind an sich bekannt und detailliert in der DE 10 2013 110 542 A1 beschrieben, sodass im Folgenden die Struktur eines Axialrotors 18 nicht nochmals beschrieben wird. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 19 und den Vorbereitungsboden 13 an die Siebanordnung 8 übergeben.

Erntegut 4, im Wesentlichen Halmgut, welches am rückwärtigen Ende des Axialrotors 7 ausgeworfen wird, gelangt zu einem noch näher zu erläuternden Strohhäcksler 20 am Heck des Mähdreschers 1, von dem es zerkleinert wird und im Anschluss über eine dem Strohhäcksler 20 nachgeordnete Verteileinrichtung 21 auf den Boden eines Feldes ausgebracht wird.

In der Siebanordnung 8 wird schließlich in an sich bekannter Weise ein gereinigter Körnerstrom abgeschieden und einem Korntank 22 zugeführt und dort zwischengespeichert.

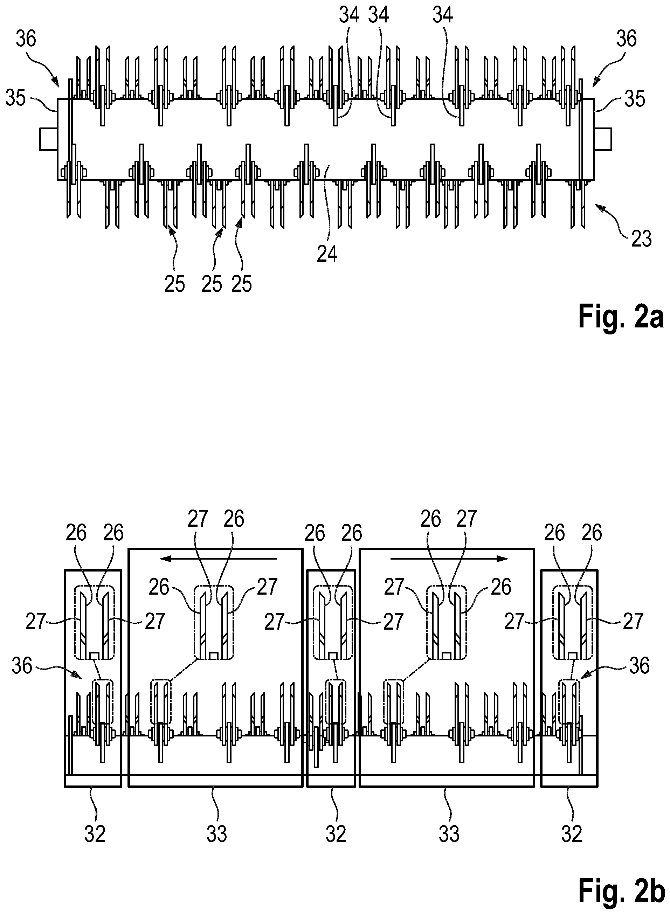

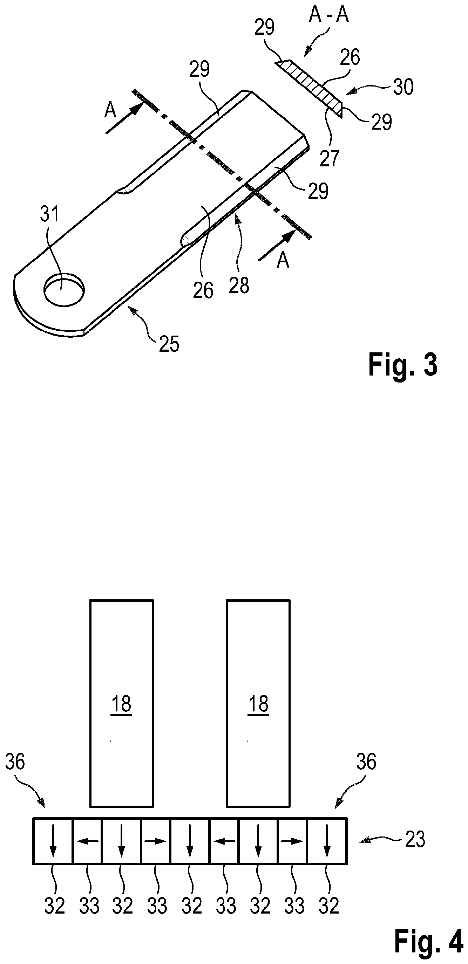

Der Strohhäcksler 20 umfasst eine im Betriebszustand rotierende Trommel 23. Wie Figur 2a zeigt, sind auf dem Trommelmantel 24 der Trommel 23 eine Vielzahl von Messern 25 angeordnet. Hierbei können die Messer 25 feststehend oder pendelnd an der Trommel 23 befestigt sein. In Figur 3 ist eines der Messer 25 detailliert dargestellt, wobei sämtliche Messer 25 als Gleichteile ausgebildet sind.

Das Messer 25 umfasst eine obere und eine untere Hauptseite 26, 27. An der oberen Hauptseite 26 ist das Messer 25 angeschliffen, sodass der Schneidbereich 28 des Messers 25 von einer einseitigen Schlifffläche 29 gebildet wird. Hier und vorzugsweise ist die obere Hauptseite 26 an sich gegenüberliegenden Enden angeschliffen. Wie in der Messerquerschnittsfläche A-A dargestellt, ergibt sich eine trapezförmige Querschnittsfläche 30 des Schneidbereichs 28. Dementsprechend ist das Messer 25 spiegelsymmetrisch zu einer senkrecht zu den Hauptseiten 26, 27 ausgebildeten Ebene. Im Ausführungsbeispiel erstreckt sich die Schlifffläche 29 etwa über die halbe Messerlänge. Es sei darauf hingewiesen, dass die Schlifffläche 29 ebenfalls über die gesamte Messerlänge ausgebildet sein kann. Zur Befestigung des Messers 25, beispielsweise mittels eines Bolzens oder einer Schraube, ist eine Bohrung 31 an dem Messer 25 vorgesehen.

Figur 2b zeigt die erfindungsgemäße Anordnung der Messer 25. Die Trommel 23 ist entlang ihrer axialen Länge in Zonen 32, 33 unterteilt, wobei die jeweilige Zone 32, 33 durch die Ausrichtung der Messer 25 definiert ist. Innerhalb der Zonen 32, 33 wird der Effekt genutzt, dass im Betriebszustand die angewinkelt zur Umfangsrichtung ausgebildeten Schliffflächen 29 das Erntegut 4 in axialer Richtung der Trommel 23 ablenken. Die Messer 25 sind derart auf der Trommel 23 angeordnet, sodass die Trommel 23 in drei neutral ausgerichtete Förderzonen 32 und zwei das Erntegut 4 nach außen ablenkende Zwischenzonen 33 unterteilt ist.

Auf dem Trommelmantel 24 befinden sich eine Vielzahl von Befestigungslaschen 34. Die Befestigungslaschen 34 haltern jeweils ein aus zwei Messern 25 bestehendes Messerpaar, wobei die Messer 25 an sich gegenüberliegenden Seiten der Befestigungslaschen 34 angeordnet sind.

Innerhalb der neutralen ausgerichteten Förderzonen 32, welche im Weiteren auch als neutrale Förderzone 32 bezeichnet wird, sind die Messer 25 derart an den Befestigungslaschen 34 angeordnet, sodass die Schliffflächen 29 und die oberen Hauptseiten 26 der an einer Befestigungslasche 34 angeordneten Messer 25 einander zugewandt sind. Auf Grund dessen, dass die Schliffflächen 29 eines Messerpaares einander zugewandt sind, neutralisiert sich im Wesentlichen die durch die gegenüberliegenden Schliffflächen 29 des Messerpaares hervorgerufene Ablenkung des Ernteguts 4 innerhalb eines Messerpaares.

Um zu erreichen, dass ein Anteil des gehäckselten Ernteguts 4 den Strohhäcksler 20 in Umfangsrichtung verlässt und zusätzlich um zu vermeiden, dass zu viel Erntegut 4 nach außen abgelenkt wird, ist eine neutrale Förderzone 32 in der Mitte der Trommel 23 angeordnet. Rechts und links von der in der Mitte angeordneten neutralen Förderzone 32 sind die Zwischenzonen 33 ausgebildet. Sämtliche Schliffflächen 29 der innerhalb der Zwischenzone 33 befindlichen Messer 25 sind in Richtung der nächstliegenden stirnseitigen Trommelenden 35 ausgerichtet. Entsprechend zeigen sämtliche Schliffflächen 29 innerhalb der rechts von der Mitte befindlichen Zwischenzonen 33 nach rechts und innerhalb der links von der Mitte ausgebildeten Zwischenzone 33 nach links. Durch die Ausrichtung der Messer 25 wird in den Zwischenzonen 33 das Erntegut 4 in Richtung des zu der jeweiligen Zwischenzone 33 nächstliegenden Außenbereichs abgelenkt und somit eine Breitenverteilung des hintenseitig aus dem Mähdrescher 1 ausgeworfenen Ernteguts 4 verbessert. Mit Außenbereich sind hier die Bereiche zu verstehen, die am jeweiligen stirnseitigen Trommelende 35 beginnen und sich in axialer Richtung von der Trommel 23 entfernen.

In den Randbereichen 36 der Trommel 23 soll nun das abgelenkte Erntegut 4 nicht weiter nach rechts oder links in Richtung der Karosserie abgelenkt werden, weiterhin wird dieser Bereich mit vergleichsweise wenig Erntegut 4 von den Axialrotoren 18 beschickt. Aus diesem Grund ist in dem jeweiligen Randbereich 36 der Trommel 23 eine weitere neutrale Förderzone 32 ausgebildet.

Damit etwaige von den Messern 25 auf die Befestigungslaschen 34 wirkenden Momente möglichst gering ausfallen, werden ausschließlich die Schliffflächen 29 zur Ablenkung des Ernteguts 4 genutzt. Die Hauptseiten 29, 30 erstrecken sich somit in Umfangsrichtung der Trommel 23.

In einer alternativen Ausgestaltung der Erfindung umfasst die Abscheideeinrichtung 7 des Mähdreschers 1 zwei parallel nebeneinander angeordnete Axialrotoren 18. Die Breitenverteilung des der Trommel 23 von den Axialrotoren 18 zuzuführenden Ernteguts 4 weist im Wesentlichen die Form zweier nebeneinander ausgebildeter Glockenkurven auf. Zum Erreichen einer gleichmäßigen Breitenverteilung des gehäckselten Ernteguts 4 umfasst hier die Trommel 23 weitere neutral ausgerichtete Förderzonen 32 und Zwischenzonen 33, die alternierend zueinander angeordnet sind. Wie in Fig. 4 schematisch dargestellt, sind die Messer 25 derart auf der Trommel 23 ausgerichtet, sodass die Trommel 23 in axialer Richtung in fünf neutral ausgerichtete Zonen 32 und vier Zwischenzonen 33 unterteilt ist. Die neutral ausgerichteten Zonen 32 sind in der schematischen Darstellung gemäß Fig. 4 mittels in Längsrichtung der Axialrotoren 18 zeigenden Pfeilen gekennzeichnet. Die nach rechts bzw. links zeigenden Pfeile kennzeichnen die Zwischenzonen 33. Stirnseitig unter dem jeweiligen Axialrotor 18 befindet sich eine neutral ausgerichtete Förderzone 32. Rechtsseitig und linksseitig benachbart zu dieser neutralen Förderzone 32 sind Zwischenzonen 33 angeordnet, wobei die Messer 25 der rechtsseitig neben der neutralen Zone 32 befindlichen Zwischenzone 33 derart ausgerichtet sind, sodass diese das Erntegut nach rechts ablenken und die Messer 25 der linksseitig neben der neutralen Zwischenzone 32 befindlichen Zwischenzone 33 das Erntegut 4 nach rechts ablenken. An den Randbereichen 36 sowie mittig der Trommel 23 befinden sich weitere neutral ausgerichtete Förderzonen 32.

### Bezugszeichenliste:

| | | | |
|---|---|---|---|
| 1 | Mähdrescher | 34 | Befestigungslasche |
| 2 | Maschinengehäuse | 35 | Trommelende |
| 3 | Schneidwerk | 36 | Randbereich |
| 4 | Erntegut | | |
| 5 | Schrägförderer | | |
| 6 | Dreschwerk | | |
| 7 | Abscheideeinrichtung | | |
| 8 | Siebanordnung | | |
| 9 | Dreschtrommel | | |
| 10 | Dreschkorb | | |
| 11 | Teilstrom | | |
| 12 | Teilstrom | | |
| 13 | Vorbereitungsboden | | |
| 14 | Obersieb | | |
| 15 | Untersieb | | |
| 16 | Reinigungsgebläse | | |
| 17 | Strohleittrommel | | |
| 18 | Axialrotor | | |
| 19 | Rücklaufboden | | |
| 20 | Strohhäcksler | | |
| 21 | Verteileinrichtung | | |
| 22 | Korntank | | |
| 23 | Trommel | | |
| 24 | Trommelmantel | | |
| 25 | Messer | | |
| 26 | Obere Hauptseite | | |
| 27 | Untere Hauptseite | | |
| 28 | Schneidbereich | | |
| 29 | Schlifffläche | | |
| 30 | Querschnittsfläche | | |
| 31 | Bohrung | | |
| 32 | Neutrale Förderzone | | |
| 33 | Zwischenzone | | |

## Patentansprüche

1. Strohhäcksler (20) mit einer drehbaren Trommel (23) und mit auf der drehbaren Trommel (23) angeordneten Messern (25) zum Häckseln von Erntegut (4), wobei die Messer (25) im jeweiligen Schneidbereich (28) einseitig angeschliffene Schliffflächen (29) aufweisen,
**dadurch gekennzeichnet, dass**
die Messer (25) derart auf der Trommel (23) angeordnet sind, sodass die Trommel (23) in zumindest drei neutral ausgerichtete Förderzonen (32) und zwei jeweils das Erntegut (4) nach außen ablenkende Zwischenzonen (33) unterteilt ist, wobei in den Randbereichen (36) der Trommel (23) jeweils eine neutral ausgerichtete Förderzone (32) und in einem mittleren Bereich der Trommel (23) eine weitere neutral ausgerichtete Förderzone (32) ausgebildet ist, wobei innerhalb der neutral ausgerichteten Förderzonen (32) die Messer (25) derart ausgerichtet sind, sodass das Erntegut im Wesentlichen in Umfangsrichtung der Trommel (23) abgelenkt wird.

2. Strohhäcksler (20) nach Anspruch 1, **dadurch gekennzeichnet, dass** sich die Zwischenzonen (33) jeweils benachbart zwischen zwei neutral ausgerichteten Förderzonen (32) befinden.

3. Strohhäcksler (20) nach einem der Ansprüche 1 bis 2, **dadurch gekennzeichnet, dass** die Trommel (23) eine Vielzahl von Befestigungslaschen (34) umfasst, wobei die Messer (25) jeweils paarweise an einer Befestigungslasche (34) angeordnet sind, wobei in den neutralen Förderzonen (32) die einseitigen Schliffflächen (29) der jeweiligen Messer (25) eines Messerpaares einander zugewandt angeordnet sind.

4. Strohhäcksler (20) nach einem der Ansprüche 1 bis 3, **dadurch gekennzeichnet, dass** in den Zwischenzonen (33) die Schliffflächen (29) der Messer (25) in Richtung des nächstliegenden Trommelelendes (35) ausgerichtet sind.

5. Strohhäcksler (20) nach einem der Ansprüche 1 bis 4, **dadurch gekennzeichnet, dass** die Messer (25) spiegelsymmetrisch ausgebildet sind, wobei die Messer (25) vorzugsweise eine trapezförmige Querschnittsfläche (30) aufweisen.

6. Strohhäcksler (20) nach einem der Ansprüche 1 bis 5, **dadurch gekennzeichnet, dass** die das Erntegut (4) nach außen ablenkenden Zwischenzonen (33) jeweils das Erntegut (4) in Richtung des nächstliegenden Außenbereichs ablenken.

7. Mähdrescher (1) mit einer Abscheideeinrichtung (7) und einem Strohhäcksler, wobei die Abscheideeinrichtung (7) zumindest einen Axialrotor (18) umfasst, wobei der Abscheideeinrichtung (7) der Strohhäcksler (20) prozesstechnisch nachgeordnet ist, **dadurch gekennzeichnet, dass**
der Strohhäcksler (20) gemäß einem der Ansprüche 1 bis 6 ausgestaltet ist.

8. Mähdrescher (1) nach Anspruch 7, **dadurch gekennzeichnet, dass** die Abscheideeinrichtung (1) zwei Axialrotoren (18) umfasst, wobei die Trommel (23) weitere alternierend zueinander angeordnete neutral ausgerichtete Förderzonen (32) und Zwischenzonen (33) aufweist, wobei die Trommel (23) vorzugsweise fünf neutral ausgerichtete Förderzonen (32) und vorzugsweise vier Zwischenzonen (33) aufweist.

## Claims

1. A straw chopper (20) with a rotatable drum (23) and with knives (25) disposed on the rotatable drum (23) in order to chop harvested material (4), wherein the knives (25) in the respective cutting region (28) have grinding areas (29) which are sharpened on one side,
**characterized in that**
the knives (25) are disposed on the drum (23) in a manner such that the drum (23) is divided into at least three neutrally orientated conveying zones (32) and two intermediate zones (33) which respectively deflect the harvested material (4) outwards, wherein a respective neutrally orientated conveying zone (32) is formed in the edge regions (36) of the drum (23) and a further neutrally orientated conveying zone (32) is formed in a central region of the drum (23), wherein, inside the neutrally orientated conveying zones (32), the knives (25) are orientated in a manner such that the harvested material is deflected substantially in the circumferential direction of the drum (23).

2. The straw chopper (20) according to claim 1, **characterized in that** the intermediate zones (33) are respectively located adjacent to and between two neutrally orientated conveying zones (32).

3. The straw chopper (20) according to one of claims 1 and 2, **characterized in that** the drum (23) comprises a plurality of mounting brackets (34), wherein the knives (25) are respectively disposed in pairs on a mounting bracket (34), wherein in the neutral conveying zones (32), the single-sided grinding areas (29) of the respective knives (25) of a pair of knives are disposed facing each other.

4. The straw chopper (20) according to one of claims 1 to 3, **characterized in that** in the intermediate zones (33), the grinding areas (29) of the knives (25) are orientated in the direction of the nearest-lying end (35) of the drum.

5. The straw chopper (20) according to one of claims 1 to 4, **characterized in that** the knives (25) are mirror-symmetrical in configuration, wherein the knives (25) preferably have a trapezoidal cross sectional area (30).

6. The straw chopper (20) according to one of claims 1 to 5, **characterized in that** the intermediate zones (33) which deflect the harvested material (4) outwards respectively deflect the harvested material (4) in the direction of the nearest-lying outer region.

7. A combine harvester (1) with a separating device (7) and a straw chopper, wherein the separating device (7) comprises at least one axial rotor (18), wherein the straw chopper (20) is procedurally downstream of the separating device (7), **characterized in that**
the straw chopper (20) is configured in accordance with one of claims 1 to 6.

8. The combine harvester (1) according to claim 7, **characterized in that** the separating device (1) comprises two axial rotors (18), wherein the drum (23) has further neutrally orientated conveying zones (32) and intermediate zones (33) disposed in alternation with each other, wherein the drum (23) preferably has five neutrally orientated conveying zones (32) and preferably has four intermediate zones (33).

## Revendications

1. Broyeur de paille (20) comprenant un tambour rotatif (23) et comprenant des couteaux (25) disposés sur le tambour (23) rotatif et destinés à hacher de la récolte (4), les couteaux (25) présentant des surfaces affûtées (29) dans la zone de coupe (28) respective,
**caractérisé en ce que**
les couteaux (25) sont disposés sur le tambour (23) de manière à ce que le tambour (23) soit divisé en au moins trois zones de convoyage (32) à orientation neutre et deux zones intermédiaires (33) déviant respectivement la récolte (4) vers l'extérieur, sachant qu'une zone de convoyage (32) à orientation neutre est respectivement réalisée dans les régions de bord (36) du tambour (33), et une zone de convoyage (32) supplémentaire à orientation neutre est réalisée dans une région médiane du tambour (23), sachant que dans les zones de convoyage (32) à orientation neutre, les couteaux (25) sont orientés de manière à ce que la récolte soit déviée sensiblement dans le sens périphérique du tambour (23).

2. Broyeur de paille (20) selon la revendication 1, **caractérisé en ce que** les zones intermédiaires (33) se trouvent respectivement de manière adjacente entre deux zones de convoyage (32) à orientation neutre.

3. Broyeur de paille (20) selon une des revendications 1 à 2, **caractérisé en ce que** le tambour (23) comprend une pluralité de pattes de fixation (34), les couteaux (25) étant disposés respectivement par paires sur une patte de fixation (34), sachant que dans les zones de convoyage (32) neutres, les surfaces affûtées (29) unilatérales des couteaux (25) respectifs d'une paire de couteaux sont disposées en étant tournées l'une vers l'autre.

4. Broyeur de paille (20) selon une des revendications 1 à 3, **caractérisé en ce que** dans les zones intermédiaires (33), les surfaces affûtées (29) des couteaux (25) sont orientées en direction de l'extrémité de tambour (35) la plus proche.

5. Broyeur de paille (20) selon une des revendications 1 à 4, **caractérisé en ce que** les couteaux (25) sont réalisés avec une symétrie spéculaire, les couteaux (25) présentant de préférence une surface de section transversale (30) trapézoïdale.

6. Broyeur de paille (20) selon une des revendications 1 à 5, **caractérisé en ce que** les zones intermédiaires (33) qui dévient la récolte vers l'extérieur dévient la récolte (4) respectivement en direction de la zone extérieure la plus proche.

7. Moissonneuse-batteuse (1) comprenant un dispositif séparateur (7) et un broyeur de paille, le dispositif séparateur (7) comportant au moins un rotor axial (18), le broyeur de paille (20) étant placé en aval du dispositif séparateur (7), du point de vue de la technique du processus, **caractérisée en ce que** le broyeur de paille (20) est réalisé selon une des revendications 1 à 6.

8. Moissonneuse-batteuse (1) selon la revendication 7, **caractérisée en ce que** le dispositif séparateur (1) comprend deux rotors axiaux (18), le tambour (23) présentant des zones de convoyage (32) à orientation neutre et des zones intermédiaires (33) supplémentaires, disposées en alternance les unes avec les autres, le tambour (23) présentant de préférence cinq zones de convoyage (32) à orientation neutre et de préférence quatre zones intermédiaires (33).
